# EUROPEAN PATENT APPLICATION

(11) **EP 4 621 211 A1**
(43) Date of publication of application: **24.09.2025**
(21) Application number: 25160055.7
(22) Date of filing: 25.02.2025
(51) Int. Cl.: F02M 31/08, F02M 31/10, F02M 31/18, F02M 35/10, F02M 31/135, F02M 31/14

(54) **ENGINE DEVICE WITH WALL-COLLISION FUEL INJECTION**

(30) Priority: 18.03.2024 JP 2024042194
(71) Applicant: Yanmar Holdings Co., Ltd., Osaka-shi, Osaka (JP)
(72) Inventor: MATSUKI, Kazuya, Osaka (JP); TOSHINAGA, Kazuteru, Osaka (JP); HONDA, Yusuke, Osaka (JP); TENTORA, Takafumi, Osaka (JP); MORITA, Gin, Osaka (JP)
(74) Representative: Novagraaf International SA

(57) **Abstract**

An engine device (1) supplies a fuel to drive an engine (2), the engine device including: an intake path (35) through which an intake flows to the engine; an intake system component provided inside the intake path; and a fuel injection unit (32) that injects the fuel, which is in a liquid state or a mixed state containing a liquid and a gas, inside the intake path toward a wall surface of the intake path, or the intake system component. The engine device utilises, as a fuel, a low GHG fuel having low greenhouse gas emissions, such as ammonia or methanol.

## Description

### TECHNICAL FIELD

The present invention relates to an engine device that supplies a low greenhouse gas (GHG) fuel having low greenhouse gas emissions, such as ammonia or methanol, to an engine to drive the engine.

### BACKGROUND ART

Conventionally, engine devices include those that supply a low GHG fuel having low greenhouse gas emissions, such as ammonia or methanol, to an engine to drive the engine. An engine device stores a low GHG fuel in a liquid state, and supplies the low GHG fuel to a combustion chamber by injecting the low GHG fuel into an intake path that is connected to the engine, or into the combustion chamber of the engine.

For example, the ammonia combustion system disclosed in Patent Document 1 is a system that mixes ammonia in a liquid state with a petroleum-based fuel, and then injects the mixture. In particular, liquid ammonia or ammonia water is atomized in a fluid mixed gas, mixed with the fuel, and then supplied to a diesel engine or a boiler as an ammonia-mixed fuel or an ammonia water-mixed fuel. The ammonia that has been injected into the combustion chamber of a diesel engine or the combustion chamber of a boiler with a petroleum-based fuel has a boiling point of about -33°C under atmospheric pressure, and is immediately vaporized in the combustion chamber to become a combustible gas. At this time, the petroleum-based fuel is in the process of being ignited and combusted, and the atmospheric temperature exceeds 1,000°C. Therefore, the petroleum-based fuel easily ignites, and is combusted together with the ammonia.

### PRIOR ART DOCUMENT

### PATENT DOCUMENT

Patent Document 1: Japanese Patent No. 7264386

### SUMMARY OF INVENTION

### TECHNICAL PROBLEM

However, in a conventional engine device such as that described in Patent Document 1, because ammonia is mixed in a liquid state with a petroleum-based fuel and then injected, the ammonia directly after injection exists as droplets inside the combustion chamber. Therefore, inside the combustion chamber, locations in which a large number of ammonia droplets exist have a locally high equivalence ratio, which results in a state of air deficiency. Meanwhile, locations where few ammonia droplets exist have a low equivalence ratio, resulting in a state of air excess. As a result, there is a concern that the properties of the exhaust gas will deteriorate due to the intense combustion of ammonia in those locations where the equivalence ratio is excessively high. Furthermore, in order for the ammonia to be mixed in a liquid state with a petroleum-based fuel and then injected, because it is necessary to atomize the ammonia in the fluid mixture, there is a problem that the structure of the engine device becomes complicated.

The present invention has an object of providing an engine device that enables stable combustion of a low GHG fuel having low greenhouse gas emissions, such as ammonia or methanol, using a relatively simple structure, while also suppressing a deterioration in the output and exhaust characteristics.

### SOLUTION TO PROBLEM

In order to solve the problem described above, an engine device of the present invention supplies a fuel to drive an engine, the engine device comprising: an intake path through which an intake flows to the engine; an intake system component provided inside the intake path; and a fuel injection unit that injects the fuel, which is in a liquid state or a mixed state containing a liquid and a gas, inside the intake path toward a wall surface of the intake path, or the intake system component.

### ADVANTAGEOUS EFFECTS OF INVENTION

According to the present invention, an engine device is provided that enables stable combustion of a low GHG fuel having low greenhouse gas emissions, such as ammonia or methanol, using a relatively simple structure, while also suppressing a deterioration in the output and exhaust characteristics.

### BRIEF DESCRIPTION OF DRAWINGS

FIG. 1 is a schematic diagram illustrating an example of an engine device according to an embodiment of the present invention.
FIG. 2 is a schematic diagram illustrating another example of an engine device according to an embodiment of the present invention.
FIG. 3 is a schematic diagram illustrating another example of an engine device according to an embodiment of the present invention.
FIG. 4 is a schematic diagram illustrating a modification of an engine device according to an embodiment of the present invention.

### DESCRIPTION OF EMBODIMENTS

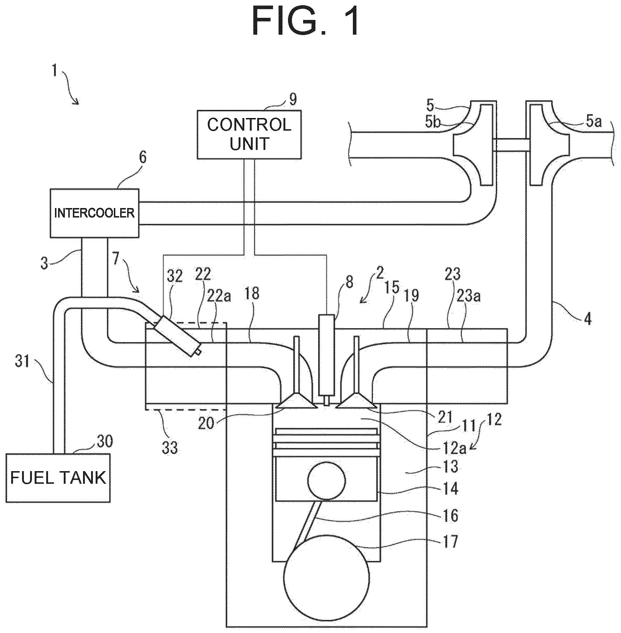

An engine device 1, which is an embodiment of the present invention, will be described with reference to drawings. As shown in FIGS. 1 to 3, the engine device 1 includes an engine 2, an intake passage 3, an exhaust passage 4, a turbocharger 5, an intercooler 6, a fuel supply mechanism 7, an ignition device 8, and a control unit 9.

In particular, in the present embodiment, the engine device 1 is configured to supply a low GHG fuel having low greenhouse gas emissions, such as ammonia or methanol, toward the combustion chamber 12a of each engine cylinder 12 of the engine 2 by using a fuel injection unit 32 of the fuel supply mechanism 7. Further, the engine device 1 is configured to combust a mixed gas containing the low GHG fuel and air in the combustion chamber 12a to drive the engine 2.

The engine 2 is configured such that the cylinder block 11 includes a plurality of engine cylinders 12. However, only one engine cylinder 12 is illustrated in FIGS. 1 to 3. Each engine cylinder 12 is configured by a cylinder 13, a piston 14, and a cylinder head 15.

The cylinder 13 is formed, for example, having a cylinder shape inside the cylinder block 11, and the piston 14 is slidably accommodated inside the cylinder 13. The cylinder head 15 is attached to the upper side of the cylinder 13. The combustion chamber 12a is formed on the inner side by the cylinder 13 and the cylinder head 15.

A crankshaft 17 is coupled to the piston 14 via a connecting rod 16 below the cylinder 13, and reciprocating motion of the piston 14 is converted into rotational motion of the crankshaft 17 via the connecting rod 16.

Furthermore, the cylinder head 15 includes an intake port 18 and an exhaust port 19 that communicate with the combustion chamber 12a of the cylinder 13, and is provided with an intake valve 20 (intake system component) and an exhaust valve 21 that respectively open and close the intake port 18 and the exhaust port 19 with respect to the combustion chamber 12a.

The intake port 18 is connected to the intake passage 3, and introduces air that is supplied from the intake passage 3 into the combustion chamber 12a. Further, the exhaust port 19 is connected to the exhaust passage 4, and discharges exhaust gas that is generated in the combustion chamber 12a into the exhaust passage 4. By opening the intake valve 20, a mixed gas containing a fuel gas and air can be taken into the combustion chamber 12a via the intake port 18. On the other hand, by opening the exhaust valve 21, the exhaust gas generated in the combustion chamber 12a can be discharged via the exhaust port 19.

Note that, in FIGS. 1 to 3, an example is illustrated in which an intake manifold 22 having a branched flow path 22a that branches from the intake passage 3 to the plurality of engine cylinders 12 is provided between the intake passage 3 and the engine 2 in order to connect the intake passage 3 and the intake port 18 of each of the plurality of engine cylinders 12. Alternatively, the intake passage 3 and the intake port 18 may be directly connected. In the engine device 1, an intake path 35 through which an intake into the combustion chamber 12a of each engine cylinder 12 of the engine 2 flows is formed by the intake passage 3, the intake manifold 22, and the intake port 18. Furthermore, in FIGS. 1 to 3, an example is illustrated in which an exhaust manifold 23 having a branched flow path 23a that branches from the exhaust passage 4 to the plurality of engine cylinders 12 is provided between the exhaust passage 4 and the engine 2 in a case where the exhaust passage 4 and the exhaust port 19 of each of the plurality of engine cylinders 12 is connected. Alternatively, the exhaust passage 4 and the exhaust port 19 may be directly connected.

The intake passage 3 causes compressed and cooled air to flow in an intake direction, and supplies the air to each engine cylinder 12 of the engine 2 via the intake port 18 of each engine cylinder 12. The exhaust passage 4 causes the exhaust gas generated in each engine cylinder 12 of the engine 2 and discharged via the exhaust ports 19 to flow in an exhaust direction and be discharged. The turbocharger 5 and the intercooler 6 are provided in the intake passage 3 in this order from an upstream side in the intake direction. Note that an air filter (not shown) that purifies and introduces fresh air may be provided on an upstream end of the intake passage 3 in the intake direction.

The turbocharger 5 compresses the air flowing through the intake passage 3, and delivers the air toward a downstream side in the intake direction. Further, the intercooler 6 cools the air that has been compressed by the turbocharger 5. The turbocharger 5 includes a turbine 5a and a compressor 5b. The turbine 5a is disposed in the exhaust passage 4, and the compressor 5b is disposed in the intake passage 3. The turbine 5a is rotated by the exhaust gas flowing through the exhaust passage 4, and the compressor 5b is driven by the rotational force of the turbine 5a, which causes the air flowing through the intake passage 3 to become compressed.

The fuel supply mechanism 7 supplies the low GHG fuel toward the combustion chamber 12a of each engine cylinder 12 of the engine 2. The fuel supply mechanism 7 includes a fuel tank 30, a fuel flow path 31, a fuel injection unit 32, and a heating unit 33.

The fuel tank 30 is a storage unit that stores the low GHG fuel in a liquid state. The fuel flow path 31 is connected to the fuel tank 30 and the fuel injection unit 32, and the low GHG fuel is supplied from the fuel tank 30 to the fuel injection unit 32 via the fuel flow path 31 by a pump or the like (not shown) in a liquid state or in a mixed state containing a liquid and a gas.

The fuel injection unit 32 has the base end connected to the fuel flow path 31, and supplies the low GHG fuel that flows therethrough from the fuel flow path 31 toward the combustion chamber 12a of each engine cylinder 12 of the engine 2. The fuel injection unit 32, for example, is configured by an injector or the like that is capable of injecting the low GHG fuel in a liquid state or in a mixed state containing a liquid and a gas. **In** the fuel injection unit 32, the injection pressure, the injection timing, and the like, of the low GHG fuel is controlled by the control unit 9.

In particular, in the present invention, the fuel injection unit 32 injects the low GHG fuel inside the intake path 35 consisting of the intake passage 3, the intake manifold 22, and the intake port 18 in a liquid state or in a mixed state containing a liquid and a gas, and is provided such that the low GHG fuel collides as a result of being injected toward a wall surface of the intake path 35 or an intake system component such as the intake valve 20. The fuel injection unit 32 vaporizes the low GHG fuel inside the intake path 35 by injecting the low GHG fuel in a liquid state or in a mixed state containing a liquid and a gas toward a wall surface of the intake path 35 or an intake system component, and causing the low GHG fuel to collide therewith. As a result, inside the intake path 35, a mixed gas is formed containing air that is taken in from the intake passage 3, and the low GHG fuel in a gaseous state, and the mixed gas is supplied to the combustion chamber 12a via the intake path 35.

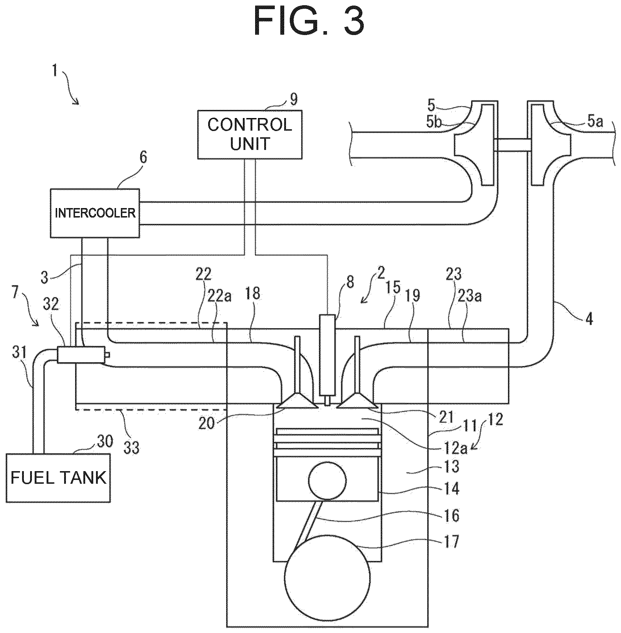

For example, as shown in FIGS. 1 and 3, the fuel injection unit 32 is provided in the intake manifold 22 to inject the low GHG fuel so as to collide with an inner wall surface of the intake path 35 in the intake manifold 22, and more specifically, is provided to perform the injection such that the low GHG fuel collides with an inner wall surface of the branched flow path 22a of each engine cylinder 12. As a result, inside the branched flow path 22a, a mixed gas is formed containing air that is taken in from the intake passage 3, and the low GHG fuel in a gaseous state, and the mixed gas containing the low GHG fuel is supplied from the branched flow path 22a to the combustion chamber 12a via the intake port 18.

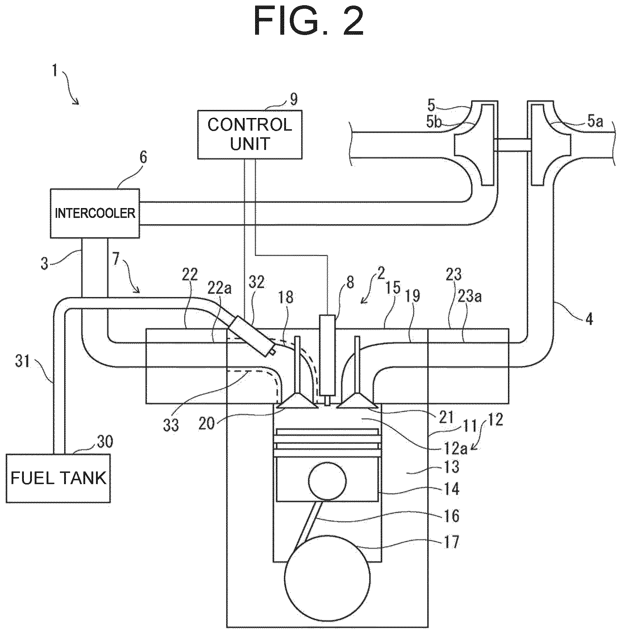

Alternatively, as shown in FIG. 2, the fuel injection unit 32 is provided in the cylinder head 15 to inject the low GHG fuel so as to collide with an inner wall surface of the intake port 18 and/or the intake valve 20. As a result, inside the intake port 18, a mixed gas is formed containing air that is taken in from the intake passage 3, and the low GHG fuel in a gaseous state, and the mixed gas containing the low GHG fuel is supplied from the intake port 18 to the combustion chamber 12a.

Furthermore, the fuel injection unit 32 may be provided such that, by injecting the low GHG fuel along the intake direction (intake flow) in the intake path 35, the low GHG fuel collides with a wall surface of the intake path 35 or an intake system component. Here, the fuel injection unit 32 is provided such that the injection direction of the low GHG fuel is at least toward the intake direction, and the injection direction may be, for example, at an angle with respect to the intake direction, or parallel to the intake direction.

For example, as shown in FIG. 1, the fuel injection unit 32 is provided in the intake manifold 22 such that the low GHG fuel is injected in the branched flow path 22a of the intake manifold 22 at an angle to the intake direction of the intake path 35, and more specifically, is provided in a wall portion of a straight section of the branched flow path 22a.

Alternatively, as shown in FIG. 3, the fuel injection unit 32 is provided in the intake manifold 22 such that the low GHG fuel is injected in the branched flow path 22a of the intake manifold 22 in a direction parallel to the intake direction of the intake path 35, and more specifically, is provided in a wall portion of a curved section of the branched flow path 22a. **In** this case, the fuel injection unit 32 is provided such that the front end is positioned in the center in the radial direction of the branched flow path 22a, and may be configured so as to inject the low GHG fuel along the intake direction such that the low GHG fuel is dispersed in a cone shape from the front end, and cause the low GHG fuel to collide with the inner wall surface over the entire inner periphery of the branched flow path 22a.

Alternatively, as shown in FIG. 2, the fuel injection unit 32 is provided in the cylinder head 15 so as to inject the low GHG fuel in the intake port 18 in a direction parallel to the intake direction of the intake path 35, and more specifically, is provided in a wall portion of the intake port 18. **In** this case, the fuel injection unit 32 is provided such that the front end is positioned in the center in the radial direction of the intake port 18, and may be configured so as to inject the low GHG fuel along the intake direction such that the low GHG fuel is dispersed in a cone shape from the front end, and cause the low GHG fuel to collide with the inner wall surface over the entire inner periphery of the intake port 18.

Furthermore, the wall surface of the intake path 35 or an intake system component, such as the intake valve 20, with which the low GHG fuel collides due to the fuel injection unit 32, is heated to at least the intake temperature, and heats and promotes the vaporization of the low GHG fuel that has collided. In this case, it is sufficient for the wall surface of the intake path 35 to at least be heated at the position in which the low GHG fuel collides in the intake direction, and it is not necessary to heat the entire intake path 35 in the intake direction.

For example, as shown in FIGS. 1 to 3, the intake manifold 22 is provided with a heating unit 33 that heats the branched flow path 22a, which is the portion of the intake path 35 with which the low GHG fuel is made to collide. Alternatively, as shown in FIG. 2, the cylinder head 15 is provided with a heating unit 33 that heats the intake port 18, which is the portion of the intake path 35 with which the low GHG fuel is made to collide.

The heating unit 33 is configured to heat the intake manifold 22 or the intake port 18 by utilizing waste heat from the engine 2. Specifically, the heating unit 33 forms the branched flow path 22a or the intake port 18 with a double-layered piping including a first piping, through which the mixed gas containing the low GHG fuel and air flows, and a second piping, which is on the outer surface side of the first piping and through which a heating medium flows. A wall portion (wall surface) of the first piping of the branched flow path 22a or the intake port 18 is heated by the heating medium.

The heating unit 33 may flow, as the heating medium that utilizes waste heat from the engine 2, for example, exhaust gas that has been discharged to the exhaust passage 4, or cooling water after heat exchange in the engine 2 or the intercooler 6. In such a case, the heating unit 33 is configured having a regulating valve that is capable of adjusting the flow rate of the heating medium that flows through to the intake manifold 22 or the intake port 18. The engine device 1 (control unit 9) monitors the heating temperature of the intake manifold 22 or the intake port 18, and is capable of making adjustments by controlling the regulating valve and adjusting the flow rate of the heating medium such that the heating temperature of the intake manifold 22 or the intake port 18 becomes a predetermined target temperature. As a result, it is possible to prevent the intake manifold 22 or the intake port 18 from being excessively heated.

Alternatively, the heating unit 33 is configured by a heater such as a ribbon heater that is wound to the outer surface of the branched flow path 22a or the intake port 18, and a wall portion (wall surface) of the branched flow path 22a or the intake port 18 may be heated by a heater that is controlled by the control unit 9 such that the temperature becomes a predetermined target temperature.

An ignition device 8 is provided in each engine cylinder 12, and ignites the fuel inside the combustion chamber 12a of each engine cylinder 12. The ignition device 8 may be configured by a spark ignition type device using an ignition plug, or may be configured by a micro-pilot type device that injects a small amount of a liquid fuel. Alternatively, the ignition device 8 may be configured by a device that compresses and ignites a mixed gas containing a gaseous fuel and a liquid fuel. The ignition timing and the like of the ignition device 8 is controlled by the control unit 9.

The control unit 9 is a computer such as an engine control unit (ECU) that controls the operation of the engine 2, is provided with a CPU, a ROM, a RAM, and the like, and is configured to control each unit of the engine 2. The control unit 9 may store various programs for controlling the engine 2, and control the engine 2 by reading out and executing the programs.

As described above, according to the present embodiment, the engine device 1 supplies a fuel, such as a low GHG fuel having low greenhouse gas emissions, to drive an engine 2, the engine device 1 including an intake path 35 through which an intake flows to the engine 2, an intake system component provided inside the intake path 35, and the fuel injection unit 32 that injects the fuel, which is in a liquid state or a mixed state containing a liquid and a gas, inside the intake path 35 toward a wall surface of the intake path 35, or the intake system component. Specifically, the wall surface of the intake path 35 is the wall surface of the intake manifold 22 or the intake port 18, and the intake system component is the intake valve 20. More specifically, the engine device 1 utilizes, as a fuel, a low GHG fuel having low greenhouse gas emissions, such as ammonia or methanol.

As a result, the engine device 1 is capable of vaporizing the low GHG fuel in a liquid state or in a mixed state containing a liquid and a gas in the intake path 35 with a relatively simple structure that makes the low GHG fuel collide with a wall surface of the intake path 35, or an intake system component, and it is possible to generate a mixed gas in which low GHG fuel in a gaseous state is uniformly dispersed in air. Therefore, by supplying the mixed gas in which the low GHG fuel is uniformly dispersed from the intake path 35 to the combustion chamber 12a, it is possible to suppress the occurrence of locations inside the combustion chamber 12a in which the air is insufficient or the air is excessive, and the uniform low GHG fuel can be stably combusted inside the combustion chamber 12a. As a result, a deterioration in the output of the engine 2 can be suppressed, and a deterioration in the exhaust characteristics, such as the properties of the exhaust gas, can be suppressed. Note that, in order to vaporize the low GHG fuel, by utilizing a wall surface of the intake path 35 or an intake system component, it is not necessary to provide a vaporization device, which allows space savings and a reduction in cost.

Furthermore, according to the present embodiment, the fuel injection unit 32 injects the low GHG fuel in a cone shape along the intake direction in the intake path 35, which causes the low GHG fuel to collide with a wall surface of the intake path 35 or an intake system component.

Consequently, as a result of the engine device 1 causing the low GHG fuel in a liquid state or in a mixed state containing a liquid and a gas to collide with a wall surface of the intake path 35 or an intake system component over the entire inner periphery of the branched flow path 22a, the low GHG fuel can be vaporized over the entire radial direction of the branched flow path 22a, and a mixed gas in which the low GHG fuel in a gaseous state is more uniformly dispersed can be generated. **In** addition, the low GHG fuel in a liquid state or in a mixed state containing a liquid and a gas can be prevented from being locally injected in a specific location of the branched flow path 22a, which prevents a liquid pool of the low GHG fuel from forming.

Moreover, according to the present embodiment, a wall surface of the intake path 35 or the intake system component is heated to at least the intake temperature.

As a result, the engine device 1 is capable of causing the low GHG fuel in a liquid state or in a mixed state containing a liquid and a gas to collide with a wall surface of the intake path 35 having a high temperature, or an intake system component having a high temperature, which causes the low GHG fuel that has collided to be heated, and can promote vaporization.

Also, according to the present embodiment, a wall surface of the intake path 35 is heated utilizing waste heat from the engine 2. Specifically, the waste heat from the engine device 2 is the heat of the exhaust gas from the engine 2 and/or the heat of the cooling water that cools the engine 2.

As a result, the engine device 1 is capable of efficiently heating a wall surface of the intake path 35 with a simple configuration that utilizes waste heat from the engine 2.

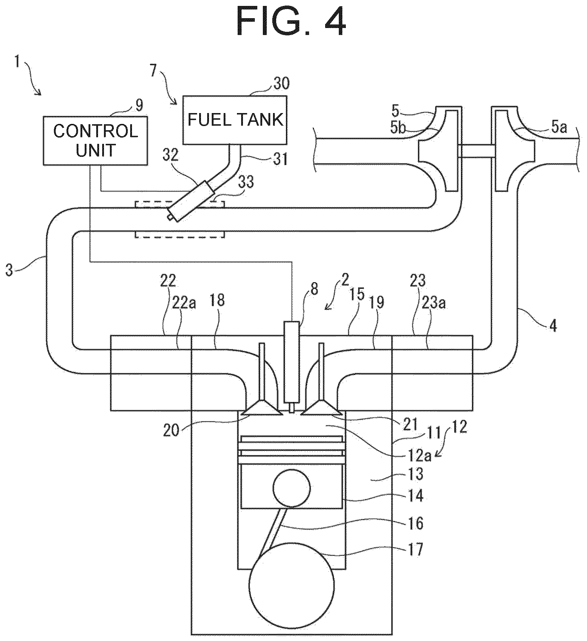

Note that, in the embodiment described above, an example has been described in which, in order to supply the low GHG fuel to the combustion chamber 12a of each engine cylinder 12, the fuel injection units 32 are provided corresponding to each engine cylinder 12, which are arranged so as to inject the low GHG fuel toward, and collide with, a wall surface of the intake manifold 22 or the intake port 18 serving as the intake path 35. However, the present invention is not limited to such an example. For example, in a modification, as shown in FIG. 4, the fuel injection unit 32 may be provided in the intake passage 3 so as to inject the low GHG fuel toward a wall surface of the intake path 35 that is shared by each engine cylinder 12, such as a wall surface of the intake passage 3, and cause the low GHG fuel to collide therewith.

**In** such a modification, the engine device 1 is configured without the intercooler 6, and is configured such that the intake passage 3 is heated at the position in which the low GHG fuel collides due to the fuel injection unit 32. **In** this case, the heating unit 33 may be configured to heat the intake passage 3 by utilizing waste heat from the engine 2, or may be configured as a heater to heat the intake passage 3. Note that the engine device 1 lowers the temperature of the low GHG fuel after collision by using the latent heat of vaporization of the low GHG fuel, which lowers the temperature of the mixed gas containing air and the low GHG fuel which is supplied to the engine 2.

**In** addition, in the embodiment described above, an example has been described in which, in order to heat a wall surface of the intake path 35 or an intake system component, the heating unit 33 is provided with a configuration that utilizes waste heat from the engine (exhaust gas from the engine 2 or cooling water after heat exchange), or a configuration utilizing a heater. However, the present invention is not limited to such an example. As another example, the heating unit 33 includes both a configuration that utilizes waste heat from the engine 2, and a configuration utilizing a heater, and the engine device 1 (control unit 9) may select one of the configurations and heat a wall surface of the intake path 35 or an intake system component according to the operation status or operation environment.

For example, when the engine 2 is started, the waste heat from the engine 2 has not increased to a temperature that allows a wall surface of the intake path 35 or an intake system component to be heated to the target temperature. Therefore, the control unit 9 heats a wall surface of the intake path 35 or an intake system component using the configuration that utilizes a heater. Note that the control unit 9 may determine the starting of the engine 2 as the time period until a predetermined time elapses after the starting of the engine 2 begins, or the time period until the exhaust gas that is discharged from the engine 2, or the cooling water after heat exchange, reaches a predetermined temperature. Furthermore, after the start time of the engine 2 has elapsed, the control unit 9 switches from the configuration that utilizes a heater to the configuration that utilizes waste heat from the engine 2, and heats a wall surface of the intake path 35 or an intake system component.

Note that, in the present invention, it is not necessary for the engine device 1 to vaporize all of the fuel in a liquid state. Even in a state in which part of the fuel in a liquid state remains, it is sufficient to generate a mixed gas in which the fuel in a gaseous state is uniformly dispersed in air (intake).

Note that the present invention can be appropriately modified within a range that does not contradict the gist or concepts of the invention that can be read throughout the claims and the specification, and an engine device to which such modifications have been made is also included in the technical concept of the present invention.

### [Supplementary Notes of the Invention]

Hereinafter, a summary of the invention extracted from the embodiment described above will be additionally described. Note that the configurations and processing functions described in the following supplementary notes can be selected and combined as appropriate.

### <Supplementary Note 1>

An engine device that supplies a fuel to drives an engine, the engine device comprising:
an intake path through which an intake flows to the engine;
an intake system component provided inside the intake path; and
a fuel injection unit that injects the fuel, which is in a liquid state or a mixed state containing a liquid and a gas, inside the intake path toward a wall surface of the intake path, or the intake system component.

### <Supplementary Note 2>

The engine device according to supplementary note 1, wherein
the fuel injection unit causes the fuel to collide with a wall surface of the intake path or the intake system component by injecting the fuel along an intake direction of the intake path.

### <Supplementary Note 3>

The engine device according to supplementary note 1 or 2, wherein
a wall surface of the intake path or the intake system component is heated to an intake temperature or higher.

### <Supplementary Note 4>

The engine device according to any one of supplementary notes 1 to 3, wherein
a wall surface of the intake path is a wall surface of an intake manifold or intake port, and
the intake system component is an intake valve.

### <Supplementary Note 5>

The engine device according to supplementary note 3, wherein
a wall surface of the intake path is heated by utilizing waste heat from the engine.

### <Supplementary Note 6>

The engine device according to supplementary note 5, wherein
the waste heat from the engine is heat of an exhaust gas of the engine and/or heat of cooling water that cools the engine.

### <Supplementary Note 7>

The engine device according to any one of supplementary notes 1 to 6, wherein
the fuel is ammonia or methanol.

### REFERENCE SIGNS LIST

1 Engine device
2 Engine
3 Intake passage
4 Exhaust passage
5 Turbocharger
5a Turbine
5b Compressor
6 Intercooler
7 Fuel supply mechanism
8 Ignition device
9 Control unit
11 Cylinder block
12 Engine cylinder
12a Combustion chamber
13 Cylinder
14 Piston
15 Cylinder head
16 Connecting rod
17 Crankshaft
18 Intake port
19 Exhaust port
20 Intake valve
21 Exhaust valve
22 Intake manifold
22a Branched flow path
23 Exhaust manifold
23a Branched flow path
30 Fuel tank
31 Fuel flow path
32 Fuel injection unit
33 Heating unit
35 Intake path

## Claims

1. An engine device that supplies a fuel to drive an engine, the engine device comprising:
an intake path through which an intake flows to the engine;
an intake system component provided inside the intake path; and
a fuel injection unit that injects the fuel, which is in a liquid state or a mixed state containing a liquid and a gas, inside the intake path toward a wall surface of the intake path or the intake system component.

2. The engine device according to claim 1, wherein
the fuel injection unit causes the fuel to collide with a wall surface of the intake path or the intake system component by injecting the fuel along an intake direction of the intake path.

3. The engine device according to claim 1, wherein
the wall surface of the intake path or the intake system component is heated to an intake temperature or higher.

4. The engine device according to claim 1, wherein
the wall surface of the intake path is a wall surface of an intake manifold or intake port, and
the intake system component is an intake valve.

5. The engine device according to claim 3, wherein
a wall surface of the intake path is heated by utilizing waste heat from the engine.

6. The engine device according to claim 5, wherein
the waste heat from the engine is heat of an exhaust gas of the engine and/or heat of cooling water that cools the engine.

7. The engine device according to claim 1, wherein the fuel is ammonia or methanol.
